# EUROPEAN PATENT APPLICATION

(11) **EP 3 664 063 A1**
(43) Date of publication of application: **10.06.2020**
(21) Application number: 18210980.1
(22) Date of filing: 07.12.2018
(51) Int. Cl.: G08G 1/16, G01S 13/88, G01S 17/93, G01S 13/93

(54) **UNDER VEHICLE INSPECTION**

(71) Applicant: Zenuity AB, 417 56 Göteborg (SE)
(72) Inventor: REILLY, Kaice, Detroit, MI Michigan 48207 (US); POPLAWSKI, James, Canton, MI Michigan 48188 (US); BEELER, Mark, LaSalle, Ontario N9J3R7 (CA); BROWN, Ryan, Royal Oak, MI Michigan 48067 (US); DEMERLY, Jon, Byron, MI Michigan 48418 (US)
(74) Representative: Zacco Sweden AB

(57) **Abstract**

The present invention relates to methods and arrangements for safety monitoring of a safety zone under and in near vicinity around a parked autonomous vehicle before driving, wherein the method comprise acquiring sensor data from an active sensor system located on the undercarriage of the vehicle, wherein the active sensor system is arranged to transmit a signal and receive the signal reflected off objects within the safety zone and store sensor data representative of substantially all of the safety zone, repeatedly building a representation of the safety zone by acquiring sensor data from the active sensor system; iteratively aggregating the representations of the safety zone with a statistical model, and continuously analysing the aggregation of representations and determining if a sensitive object is located within the safety zone of the vehicle.

## Description

### Technical field

Herein is presented system, methods and arrangements for monitoring an area under a vehicle and for detecting objects under the vehicle for safety reasons.

### Background

Development of solutions for autonomous vehicles has a large focus and many different technical areas are being developed. Today, development is ongoing in both autonomous driving (AD) and advanced driver-assistance systems (ADAS) for different levels of driving assistance. As the vehicles become more and more autonomous, safety aspects increase in importance to reduce the risk of accidents and damage to both the vehicle and objects and humans located in the surrounding areas. These types of vehicles have a number of sensors located on the vehicle to detect the surrounding areas (halo) and determining distance to and location of objects, other vehicles movement, position, speed, and yaw of ego-vehicle and other vehicles, and from all these data determine safe route for the ego-vehicle towards a set destination.

In order for any unsupervised vehicle to move from rest it must be able to identify whether or not an object has gone under or close to a vehicle, such that the vehicle upon driving away will hit the object (or person) and cause damage/injury to the object or the vehicle in question. In the case of a vehicle in motion or in one which starts its motion while supervised by a human, we can assume that the vehicle is obstacle free, because either the human saw this to be true or because, while in motion, the vehicle's sensor-halo identified anything moving into the required free space area of the vehicle. If any object moves into the path and does not move out, the sensor-halo should indicate that an obstruction is present. However, in the case of two objects moving into the field of the vehicle, but only one moves out, e.g. first a ball then a child moves in or close to the vehicle but out comes ball together with child, the sensor-halo is not sufficient to identify and take a secure decision that both objects has left a safety zone around the vehicle or not - a control system will most likely only detect that one object has left the safety zone. Vice versa, if two objects enter the zone together but only one of them leaves the system might determine that no object is still within the safety zone if only relying on the traditional sensor-halo around the vehicle.

One early technical area being developed is parking assistance where the vehicle monitors the surroundings and controls the vehicle into a parking spot without driver assistance. One safety solution in this area is for instance shown in US9718404 where a solution for detecting objects close to a car, which might be higher than the undercarriage, is presented. This solution has an outward looking sensor located on the front of the vehicle for detecting objects in front of the vehicle and a downward looking sensor to determine the distance between the undercarriage and the ground.

In the case of a vehicle starting up from a completely stopped and turned off position (i.e. a parked car), there is no way to know if an object has penetrated the sensor-halo and has entered into the planned path of motion for the vehicle. This is particularly true of the sensor dead zone beneath the vehicle. In order to start the vehicle and safely place the vehicle in motion from this situation, it is imperative to deterministically assess the free space within the halo of standard autonomous vehicle sensors. In its most simplistic form: how does one check under the vehicle? How does one check the blind spots close into the vehicle?

In US patent application 2018/0181120, a method and system for monitoring an area underneath an autonomous vehicle is discussed, wherein a first topography of a ground surface underneath the vehicle is captured prior to the vehicle being switched off; capturing a second topography of the ground surface before the vehicle begins moving; and comparing the first and second topographies with each other.

### Summary

It is an object to obviate at least some of the above disadvantages and provide improved method and devices for safety monitoring of an area under a vehicle and an area in a near vicinity around the vehicle, i.e. a safety zone. This is provided in a number of embodiments in which a first is a method for safety monitoring of a safety zone under and in a near vicinity around a parked autonomous vehicle before driving. The method comprise acquiring sensor data from an active sensor system located on the undercarriage of the vehicle, wherein the active sensor system is arranged to transmit a signal and receive the signal reflected off objects within the safety zone and store sensor data representative of substantially all of the safety zone. The method further comprise repeatedly building a representation of the safety zone by acquiring sensor data from the active sensor system and iteratively aggregating the representations of the safety zone with a statistical model. The method further comprise continuously analysing the aggregation of representations and determining if a sensitive object is located within the safety zone of the vehicle.

The method may further comprise a step of sending a communication signal, the signal indicative of the object, if the object is detected within the safety zone. The step of sending may comprise sending the signal to at least one of a control system in the vehicle, a user interface in the vehicle, a portable user device, and a control system located away from the vehicle.

The safety zone comprises an area under and in the near vicinity around the vehicle where there is a risk of hitting or injuring an object. The area around the vehicle may be within 10 cm around the vehicle, 20 cm around the vehicle, or 50 cm around the vehicle in the ground plane. Determining if a sensitive object is located within the safety zone may comprise determining if an object larger than a pre-set size and/or pre-set shape is detected, where the pre-set size may be one of 50 cm, 20 cm, or 10 cm in cross-section as seen from the sensor perspective.

The active sensor system may be at least one of a Lidar, radar, and an active sonar sensor system. The sensor system may further comprise at least one optical camera assisting in identification of detected object. If an object has been detected the system may transmit images from the at least one optical camera to at least one of a control system in the vehicle, a user interface in the vehicle, a control system located away from the vehicle, and a portable user device.

The method according to any preceding claims, wherein the statistical model comprise averaging of the aggregated representations.

Another embodiment is provided in a processing device, wherein the processing device comprises at least one processor, at least one memory, and at least one sensor interface (206). The processor is arranged to execute instruction sets stored in the memory to perform a method for safety monitoring of a safety zone under a parked autonomous vehicle before driving. The method comprise acquiring sensor data via the at least one sensor interface from an active sensor system located on the undercarriage of the vehicle, wherein the active sensor system is arranged to transmit a signal and receive the signal reflected off objects within the safety zone and store sensor data representative of substantially all of the safety zone, repeatedly building a representation of the safety zone by acquiring sensor data from the active sensor system, iteratively aggregating (503) the representations of the safety zone with a statistical model, and continuously analysing (504) the aggregation of representations and determining if a sensitive object is located within the safety zone of the vehicle.

Yet another embodiment may be provided, a vehicle comprising at least one sensor located on the undercarriage of the vehicle and a processing device arranged to execute the method as set forth above and in the claims. The sensor system may be located on a retractable beam and the retractable beam and sensor may be retractable into a protective housing in the undercarriage of the vehicle.

The proposed solution makes it possible to achieve a completely safe transition from a vehicle in a parked and off state to motion. The solution provide a possibility to in real time monitor and determine that the safety zone is free from objects It can also enable the vehicle to avoid hazards during on and off-road vehicle operation.

This has the advantages of providing an efficient way of providing an inspection under a vehicle which can be used for determining that no objects are located under the vehicle, and potentially controlling the condition of the vehicle undercarriage and wheel arrangements.

### Brief description of the drawings

In the following the invention will be described in a non-limiting way and in more detail with reference to exemplary embodiments illustrated in the enclosed drawings, in which:
- Fig. 1: is a schematic diagram illustrating an example vehicle;
- Fig. 2: is a schematic block diagram illustrating exemplary control circuitry;
- Fig. 3: is a schematic diagram illustrating an exemplary blind spot area;
- Figs 4A-C: are schematic diagrams illustrating exemplary positions of sensor(s);
- Fig. 5: is a schematic block diagram illustrating an exemplary method; and
- Fig. 6: are schematic diagrams of a sensor mounting

### Detailed description

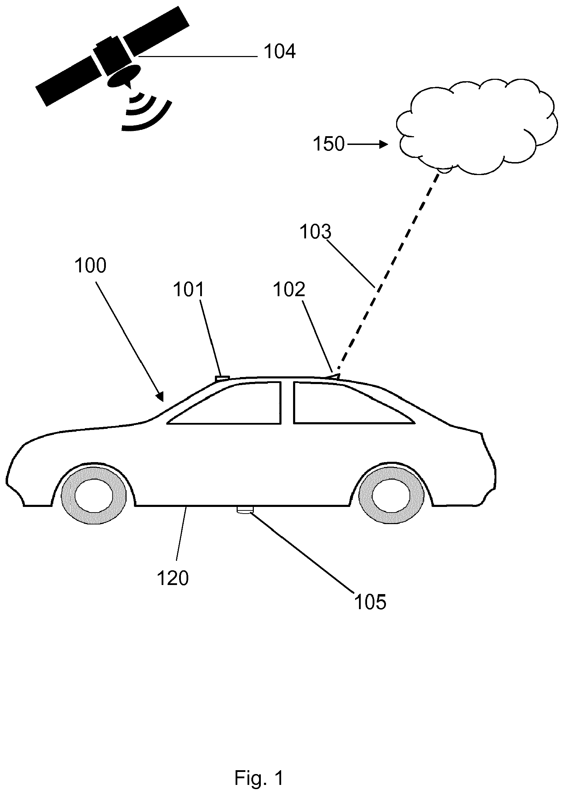

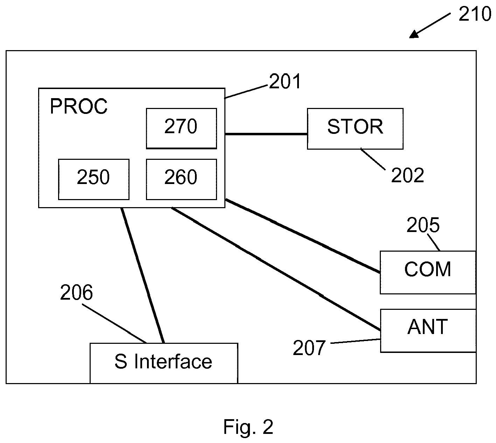

In Fig. 1 reference numeral 100 generally denotes a vehicle, or sometimes denoted as ego-vehicle, that may be autonomous, manually driven or a combination of these, i.e. semi-autonomous. The vehicle 100 comprise suitable parts for propulsion and controlling the vehicle such as an engine or electrical motor(s), control electronics for controlling the engine/motor, user interface dashboard, wheels and so on as understood by the skilled person. However, for autonomous or semi-autonomous driving, the vehicle have control circuitry 210, as will be described in more detail in relation to Fig. 2, and one or more sensors 101, 102 for providing data such as related to position, speed, direction of travel, temperature, road surface characteristics, and so on. Position sensors may include sensors receiving signals from one or several satellite based positioning systems, e.g. from GPS satellites 104 via an antenna 102 and/or one or more cameras 101 providing images of the road and surrounding areas. These images may be processed to determine vehicle position relative road boundaries, other vehicles and so on. The vehicle may also be provided with an IMU (Inertial Measurement Unit) (not shown) comprising accelerometers and gyroscopes for assisting in tracking the vehicles position and movements. Other sensors that may be used are for instance Lidar (light detection and ranging) and radar for keeping track of distances and relative speed to other vehicles around the vehicle; these sensors have not been illustrated in Fig. 1 but may be housed within the vehicle or combined in sensor unit 101. The antenna may be used for both communication with external networks and also for receiving GPS signals; however, separate antennas may be provided for external communication and GPS signals. One or several undercarriage sensor systems 105 for monitoring an area under the vehicle are located in or on the undercarriage 120 of the vehicle; this sensor will be discussed in more detail below.

The vehicle may further be connected to external network(s) 150 via for instance a wireless link 103. The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, V2V, and/or vehicle to infrastructure, V2X. Examples of cellular radio technologies are GSM, GPRS, EDGE, LTE, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The vehicle control circuitry/system 210 is used for controlling the vehicle and is illustrated in Fig. 2. Control circuitry may comprise at least one processor 201 with a number of modules 250, 260, and 270 for performing different operations, at least one computer readable memory or storage medium 202 for storing data and/or instruction sets for operating different functions in the processor. Furthermore, optionally, depending on functionality provided in the control circuitry one or more communication interfaces 205 and/or one or more antenna interfaces 207 may be provided and furthermore, one or more sensor interfaces 206 may be provided for acquiring data from sensors within the vehicle. The modules of the processor may be an acquisition module 250, an analysis module 260 and an action module 270 each arranged to execute instruction sets for different steps of a process for acquiring control parameters for controlling the vehicles movement. It should be appreciated that the communication/antenna interface may also provide the possibility to acquire sensor data directly or via dedicated sensor control circuitry in the vehicle: for instance GPS data may be acquired through the antenna interface, some sensors in the vehicle may communicate with the control circuitry using a local network setup, such as CAN bus, I2C, Ethernet, optical fibres, and so on. The communication interface may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

The processor 201 may for instance be a microprocessor, digital signal processor, graphical processing unit (GPU), embedded processor, field programmable gate array (FPGA), or ASIC (Application specific integrated circuit). The storage unit 202 may be a volatile or non-volatile computer readable memory and arranged to store instructions or instruction sets for execution by the processor. Instruction sets are preferably stored in a non-volatile memory such as solid state (SSD) or disk drive storage, flash memory, or memory card. The storage unit may also comprise a combination of storage types.

The undercarriage sensor system is arranged to provide data indicative of the area under the vehicle and the field of view may also extend some distance out from the vehicle providing an extended view of the surrounding area around the vehicle. The sensor system may comprise one or several sensors and some control circuitry (not shown) for controlling the operation of the sensors, providing power management, and provide communication with the sensors. The sensor system acquires data from at least one sensor located under the vehicle and the sensor system may be arranged to provide a representation of the area under the vehicle or provide the processor of the vehicle control circuitry with data which in turn analyses the data and builds a representation of the area being monitored. Such a representation is advantageously some type of image showing structures within the field of view of the sensor or sensors. The processor is further arranged to analyze the representation to detect objects and/or structures under or in close vicinity to the vehicle within a pre-determined safety zone. In this context safety zone is defined as the area under the vehicle and some distance around the vehicle at essentially ground level, i.e. within the Field of View that the undercarriage sensor system can build a representation of. Furthermore, advantageously the representation also comprise distance information to objects and/or structures in the representation. If any objects are detected the vehicle control system takes appropriate action; for instance alerting a user of the vehicle of the presence of the object or sending a signal to the control system of the vehicle. Furthermore, the control system of the vehicle can take appropriate action, for instance issuing a stop command to the vehicle to not drive until the object has been removed or received a signal that the vehicle can start driving even if the object is still present, for instance from a user overriding the stop command. A user may be alerted in several ways, for instance by a signal on a dashboard of the vehicle or an alert message sent to a smart phone or similar communication equipment operated by the user.

Different types of sensors may be used for providing a field of view under the vehicle. Preferably, sensors of an active type are used, i.e. the sensor send out a signal that is reflected from objects and then the sensor detects the reflected signal. The sensor system may then measure the reflective signal response time between transmission and detection which in turn may be converted to distance in specific directions. These active sensors may be for instance Lidar, Radar, or active ultra-sonic detectors. The sensor signals may then be arranged to build up a representation of the area under the vehicle. Even though the sensor signal comprise timing/distance information, the representations may be analysed to determine size and/or shape of objects. However, in some embodiments also passive sensors may be used, such as one or several optical cameras, stereo cameras, passive acoustic sensors, IR/NIR/FIR/FLIR cameras and so on. Furthermore, a combination of these sensor types may be used for providing different types of signals or redundancy to increase safety. For instance a combination of Lidar sensor(s) and optical camera for assisting in identification of object(s) may be used. Different sensors may provide different types of sensor signals that will be analysed accordingly by the processor 101. Such processing may include determining size and/or shape of objects located under the vehicle. Another type of sensor that may be used is an optical stereo camera with an illumination source, i.e. a semi-active solution.

Passive sensors may have high rates of false positives and negatives measurements, i.e. the data provided may include objects that are not present in the real world or may provide no data when there is an object present in the real world, respectively, passive sensors may thus be unreliable for safety monitoring. The safety regulations under discussion for autonomous vehicles may be too high for the use of passive sensors.

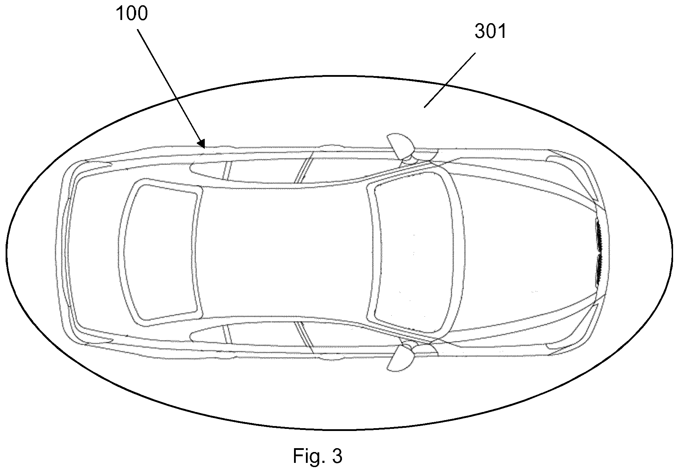

The control system 210 will use the undercarriage sensor system for scanning the area for any potential objects that could harm the vehicle when starting to drive or objects that could be harmed by the vehicle during motion and/or during the initiation of motion. It should be noted that the analysis of any potential objects may be performed either in the vehicle control system 210, in a stand-alone system, for instance in the sensor system, or remotely in a centralized server device. Referring to Fig. 3, the sensor(s) installed under the vehicle 100 may be arranged to be able to obtain a field of view (FOV) under the vehicle and some area 301 around the near vicinity of the vehicle which normally is outside the FOV of other sensors on the vehicle. This area outside the FOV of the other sensors in the near vicinity around the vehicle is usually within 10 cm around the vehicle, 20 cm around the vehicle, or 50 cm around the vehicle in the ground plane depending on the other sensors location and type. However, it should be understood that other distances around the vehicle may be applicable. The FOV 301 of the under the vehicle sensor system 105 should preferably overlap a pre-determined safety zone around the vehicle which should be free of potentially sensitive objects before leaving from standstill. Sensitive objects can for instance be objects that could harm the vehicle or objects that could be harmed by the vehicle.

When a potential object is detected under the vehicle, the system may control the vehicle so as to not being able to start driving or alerting the user via a suitable user interface in the vehicle or send an alert signal to a control circuitry of the vehicle, a user interface in the vehicle, an external control circuitry located away from the vehicle, for instance in a cloud solution, or to a user device, such as a smart phone or similar portable device with communicative connection to the vehicle either directly or indirectly via a server in a cloud solution. In order to facilitate for the user or a supervisor in determining if it is clear to drive, an optical camera may also be installed on the undercarriage for providing an optical view of the situation and images from the optical camera could be provided to the user or supervisor. The user may then easily assess the area under the vehicle and determine if the detected object or objects are such that it is possible to drive or if they need to be removed; for instance if an empty plastic bag is located in the area, it may be safe to start driving even though the system is indicating a potential object. The optical camera(s) may be equipped with lighting in order to provide a good view even when it is too dark for the camera to normally provide a good image. It should be noted that the images from the optical camera can also be analysed by a processing device identifying the object and providing a control signal in accordance.

Objects larger than for instance 10 or 20 cm in any direction may be a suitable size for taking a decision that some action is needed. However, other sizes of objects may be determined as potential objects to handle. This is discussed in more detailed later in this document.

In one embodiment, an external control circuitry located away from the vehicle, for instance in a cloud solution, is used for handling the safety feature of the vehicle. A server may be arranged to receive either signals indicative of objects under the vehicle or sensor data wherein the server is arranged to analyse and determine if objects are under the vehicle. Such as server solution may be arranged to further coordinate several vehicles and their operation. It should be understood that server solutions may be utilized also for below discussed implementations of the undercarriage system.

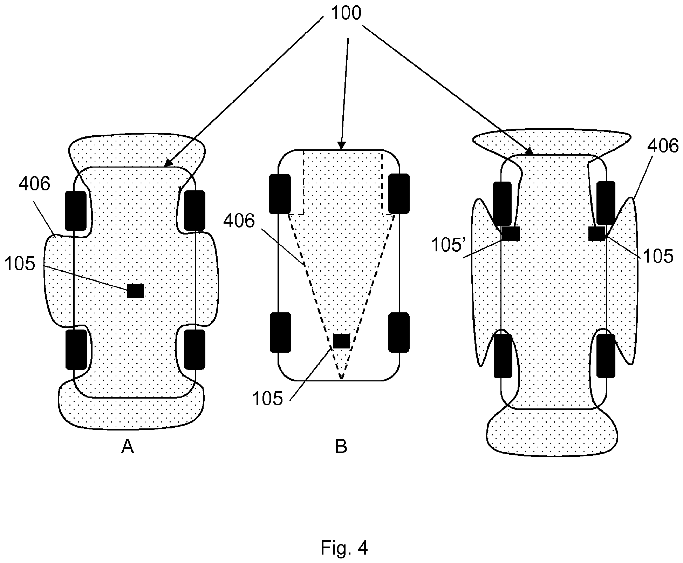

Referring to Fig. 4, the sensor or sensors 105, 105' may be located on or in the undercarriage at different locations depending on type of sensors and wanted field of view (FOV). In Fig. 4A one sensor 105 is located essentially in the centre of the undercarriage of the vehicle 100 and the sensor provide substantially a 360 degree view in the horizontal plane and a view from the ground up to the undercarriage in order to build a representation of the area (i.e. volume) under the vehicle. Depending on type of sensor some FOV might be obstructed due to wheels or other parts of the vehicle blocking FOV or any active signal sent out from the sensor, e.g. Radar or Lidar signal. Thus only a partial area 406 will be covered, but substantially all of the area is monitored.

In the embodiment exemplified in Fig. 4B, the sensor or sensors 105 are located at one end of the vehicle providing a field of view of an area 406 in one longitudinal direction of the vehicle with some spread depending on sensor used, for instance with a field of view in the forward direction of the vehicle. In another embodiment a similar setup may be used but where sensors are located at each end of the vehicle with field of view towards each other, i.e. one in the forward direction and one on the backward direction.

In Fig. 4C two sensors 105 105' are depicted, each located at a longitudinal side of the vehicle, for instance close to the wheels, with overlapping field of views wherein the combined view is essentially covering the area 406 under the vehicle and some distance away from the vehicle. It should be understood that the FOV areas depicted in the figures are only for illustrative purposes and not limited to these ranges. The practical FOV may be larger, smaller and in different shapes depending on configuration of sensor(s) and location of sensor(s).

It should be understood that the sensors may be set up as a sensor unit with one or several sensors mounted on the sensor unit. Furthermore, in the examples of Figs 4A to 4C the area covered by the sensors may extend outside the area under the vehicle to provide a field of view also at some distance away from the vehicle in order to better provide coverage of areas that might be blind spots for other sensors used for "seeing" the surrounding area of the vehicle. For instance, sensors located on the roof of the vehicle has limited view close to the vehicle and close to the ground/road within a safety zone of the vehicle. The safety zone may be set for which within it is determined that it is important to keep track of potential objects and determining that no objects are within before driving away with the vehicle from standstill.

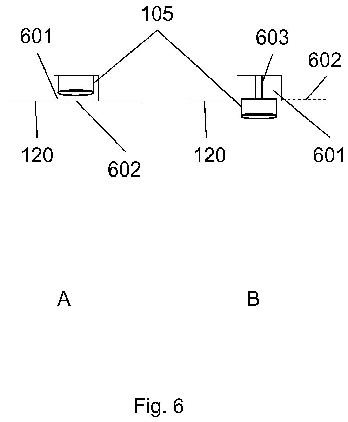

The sensors used may be mounted with different solutions depending on type of sensor and wanted field of view. As seen referring to Figs 4A-C different locations may be used and they may need different types of mounting solutions as will be discussed in more detail with reference to Fig. 6. In the case as seen in Fig. 4A a sensor with essentially a 360 degree field of view is preferably used, this sensor may be arranged with a sensor that rotates at a certain speed to acquire a 360 degree FOV or it may be arranged with several sensors together providing a 360 degree FOV.

Advantageously, the primary design may utilize a single rotational LiDAR. This single sensor may be located near to the spatial center of the vehicle. However, other sensor locations may be provided as will be discussed below.

Again referring to Fig. 4A, a single 360 degree sensor, e.g. a rotating sensor, such as a LiDAR, is shown. The same configuration can be used with a rotating "single-face" LiDAR that has a limited FOV. In the latter case a telescoping mechanism could provide rotation and 360-degree coverage.

In the embodiment illustrated in Fig. 4C, two or more spinning or rotating sensors or telescoping, non-rotational sensors have similar options with spinning and non-spinning LiDARs. In this case the sensors are placed so as to provide an overlapping field of view, for example as shown in Fig. 4C one close to the right front wheel and the other to the back left wheel; however, other placement may be utilized as long as the two sensors field of view overlap in such a way as to provide a suitable area coverage.

In case of two or more sensors it is advantageous to allow the sensors to operate in a manner minimizing disturbing each other if they are actively sending out a probing signal, this may be done for instance either by ensuring the active probe signal is not directed towards any other sensor receiver or the sensors take turn in time to transmit and receive their respective signal.

An alternative embodiment may be provided where a torsioned or oscillating LiDAR is provided, which does not complete a full 360-degree rotation, but oscillates in order to cover a larger FOV than a static solution.

For all configurations it is possible to add a "pistoning" motion to each of the sensors, so as to either scan a wider vertical field-of-view (FOV) or to move out of the FOV of other under-the-vehicle LiDARs.

Other designs could use a LiDAR with a limited field of view, for instance non-spinning, less than 360 degrees, and so on, that is then rotated, once it is deployed, for instance extruded from the undercarriage, in order to produce a full 360-degree image underneath the vehicle.

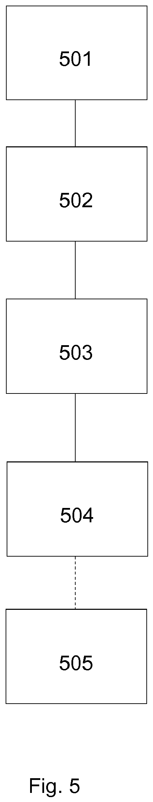

A method of operation in relation to the safety solution ensuring no objects are located under the vehicle is shown in Fig. 5. The under the vehicle system is arranged to monitor the area under the vehicle by acquiring 501 sensor data from the sensor system located on the undercarriage of the vehicle. The vehicle may for instance be parked at a parking spot or at other locations. The monitoring of the area is done shortly before driving away from standstill, for instance a few seconds before leaving to ensure no objects have had time to enter the area after the monitoring takes place. During the monitoring period also other sensors located on the vehicle may be used to check the surrounding area so as to in real time monitor that no new object(s) enter into the close vicinity of the vehicle. The under the vehicle sensor system is preferably an active sensor system, i.e. the sensor system is arranged to transmit a signal which signal in turn is reflected off objects under the vehicle or from parts of the vehicle itself. The reflected signals are then received by a sensor device and analysed and/or stored in the storage medium 202.

The sensor system is arranged to acquire data representative of substantially all of the area under the vehicle. When the data have been acquired the vehicle control system 210 or the sensor system 105 is arranged to build 502 a representation of the area under the vehicle by analysing the sensor data. This is done by acquiring a plurality of representations of the area under the vehicle. The analysis of sensor data depend on the type of sensor used and data provided; for instance using a Lidar sensor the data may be used to build an image by knowing the direction of sent-out signal and received signal and continuously measuring the distance to objects or structures from the Lidar sensor, thus repeatedly building up a representation of the area/safety zone within field of view of the Lidar. Similarly, a representation may be built up using a Radar as sensor or an active sonar sonic sensor. The system acquires a number of scans to build representations of the area under the vehicle. The number of representations acquired depend on a required level of certainty that the area under the vehicle is free from objects or that there are no objects within the close surrounding area of the vehicle. The number of representations needed to obtain a suitable level of certainty may be for instance 5, 10, 25, 50, or 100 representations; however, some other number of representations, both higher, lower and intermediate, may be acquired depending on the required level of certainty needed and the level of accuracy of the system/sensors. The number of representations to acquire may be pre-set or determined during monitoring when the required level of certainty has been reached, i.e. dynamically stop the scans when a suitable level is reached. The system may continuously perform scans of the area under the vehicle and build a number of representation until the pre-set level of certainty is reached and then the system stops scanning. The processing and analysis of the representations may be performed continuously during the operation to determine that the area is free from objects.

The representations are then iteratively aggregated 503 using a statistical model. Such a statistical model may be by adding the representations to each other in an averaging manner such as producing mean values and thus decreasing the standard deviation. The statistical model is arranged so as to increase the level of certainty that there is no object under the vehicle, thus providing a statistically reliable determination of free space under the vehicle and/or around the vehicle depending on the sensor-halo of the other sensors located on the vehicle. The level of certainty is preferably pre-set in the system or may be updated at some point. The level of certainty needed may for instance be controlled by authorities demanding a certain level for safety reasons and/or be agreed upon by associations. The level of certainty may for instance be related to confidence levels set forth or to be developed within the functional safety standard ISO 26262 ASIL (Automotive Safety Integrity Levels); this standard is under development. Alternatively, internal safety standards may be applied in determining suitable level of certainty or confidence in sensor data.

The aggregated representation is continuously analysed 504 as the aggregation is iteratively done to determine if one or several objects or structures are located in the area of field of view under the vehicle, on the vehicle, or in the close vicinity of the vehicle, the safety zone. Alternatively, the analysis is done such as to determine that the level of certainty of the statistical set of the aggregated representation is appropriately high and conclude that no object is detected. The system may detect objects by determining location of objects in the representation, e.g. by determining distance to objects, or determine shape, and/or size of objects within the safety zone. Knowing the distance to structures of the vehicle, such as for instance the wheels, the system can determine that an object that is not supposed to be under the vehicle is located under the vehicle or within an area/zone around the vehicle where it is determined it could potentially be a risk for the object or the vehicle. In order to reduce the number of false results, a pre-determined minimum size of object(s) to detect may be set, such as for instance 20 cm in cross-section as seen from the sensor system; however, other sizes may be set, both smaller and larger such as 10, 30, 40, 50, or 100 cm. The size of the object may be set depending on situation and use of the system. The under the vehicle sensor system may be used for determining distance, size, possibly material composition, and/or provide object identification. A database with shapes of sensitive objects may be provided for quick identification and determination if they would infer any action.

If one or several objects or structures are detected with a size and location rendering some action, the sensor system or vehicle control circuitry may optionally send 505 a signal indicative of the object(s) to a control module in the control circuitry, a user interface or to a control system external to the vehicle. This signal may be used for controlling that the vehicle may not start driving or for alerting a user of the vehicle or an external system or third party person of the object.

In a parking situation, the vehicle may be called upon from a user that is not located by the vehicle, for instance the user may be standing outside a restaurant and send a signal to the vehicle for summoning the vehicle to drive itself to the location where the user is. Thus, no user is present when the vehicle is to start driving and can check for any objects under the vehicle and there is a need for ensuring no objects is under the vehicle. The system runs a plurality of scans of the area under the vehicle to build a statistically appropriate representation of the area and determines if any objects are located under the vehicle.

The system may be arranged to transmit the representation to the control system 210 of the vehicle, a user interface dashboard in the vehicle (not shown), a portable user device (not shown), or a control system located away from the vehicle (not shown). In a solution where additionally at least one optical camera is provided and also mounted on the undercarriage giving a FOV under the vehicle, these optical images alone or in combination with the representation may be used for assisting the identification of objects located under the vehicle or within the close vicinity of the vehicle and may be sent to the control system of the vehicle, a user interface in the vehicle, to a portable user device, or to an external control system. If the image is sent to a user interface or portable user device, the user may determine if the object is of concern or if the vehicle may drive without need for removing the object.

It should be noted that the different analysis parts described above may be processed in one processing device or different analysis parts in different processing devices where intermediate results are shared between the processing devices.

The sensor may be fixedly arranged on the undercarriage or it may be located inside the undercarriage and extended during operation. The latter may be arranged with an extendable mechanism as seen in Fig. 6. The sensor(s) 105 are located inside the undercarriage 120 within a cavity 601 providing protection to the sensors during non-operation. Optionally a protective cover 602 may be provided that may be removed when the sensor(s) are to be deployed as seen in Fig. 6B. In Fig. 6B, the sensor(s) are located on a rod or similar mechanism 603 in turn attached to a positioning mechanism (not shown) for pushing the sensors to a position of operation.

Also in an embodiment where the sensors are located on the undercarriage and not in a protective cavity, the sensors may be arranged on a rod or similar mechanism to provide a better field of view. This rod or similar mechanism may be arranged to be movable using a suitable motorized mechanical solution in order change the field of view during operation if needed, for instance to provide a larger field of view.

Some designs involve extrusion and retraction (telescoping or periscoping of a rotatable or spinning or non-spinning LiDAR sensor) of one or more sensors from the undercarriage of the vehicle. The sensor or sensors may be located inside the undercarriage and upon on use brought out from a protective housing to allow for proper scanning of the area under the vehicle. It should be understood that the sensor(s) may be located on the undercarriage with a constant field of view but with a protective casing that provide protection but at the same time transparent to sensor technology used, for instance in the case of Lidar the casing would be transparent to the wavelength of the laser used. In an alternative solution the sensor is located inside the undercarriage but during use a mirror can be protruded and provide an appropriate field of view for the sensor; the mirror may it that case also work as protective cover when not in use.

The system may also be used for determining a position of the vehicle relative objects in the vicinity of the vehicle. By using a Lidar sensor or similar sensor technology providing accurate and high precision distance information it is possible to measure the distance to objects located in the vicinity of the vehicle with the undercarriage sensor solution.

For parking and other purposes, proximity to parking blocks, curbs, barriers, or similar may provide valuable information during localization in a parking lot. This information may then provide valuable information to the overall localization problem.

Because the under the vehicle system is low to the ground it has potential to see under vehicles in a parking garage and identify the location of walls in parking garages. These data may be inputs for the localization problem.

Using the representation(s) obtained from the sensor system there is a further advantage of that it is possible to monitor the condition of the vehicle such as detecting damages to the undercarriage, wheels or other parts of the vehicle located so as to be viewable by the undercarriage sensors. This may for instance be done by obtaining and storing a reference representation of the undercarriage status at one stage and then comparing subsequently obtained representation or representations with the reference representation. The reference representation may be provided for instance as a template representation of each vehicle type and provided during installation of the under the vehicle sensors system or during manufacture of the vehicle, i.e. the sensor system need not acquire a reference model during operation but the reference model may be a factory provided image/representation stored in the sensor system or in the vehicle. If one or several deviations are found, the processing system or a control system may alert the user of the vehicle that deviations exist, or even contacting a service organization with information about deviations and optionally providing the representations for inspection by the service organization; in such an automated scenario a central service server may even book a service time slot for checking in the vehicle to a service centre. It should be understood that the solution may be used for detecting other conditions of the vehicle than damages, such as size of wheels, rust, dirt, and so on. Also, it may be used to detect if a trailer is connected to the vehicle. By making a simple comparison to the known state (factory condition) of the vehicle undercarriage and the current state, if substantial deviations are detected the vehicle can provide an alert indicator on a dashboard or transmit an alert signal, optionally together with information regarding the deviations, to a user smart device showing vehicle maintenance may be needed or even be used for automatic booking of service together with information about damages or deviations.

The presented solutions are particularly advantageous for autonomous vehicles but could also find applicability in semi-autonomous and manually driven vehicles.

An additional use case is for a vehicle when traversing rough terrain. This is a very difficult problem for off road driving, due to limited visibility under the vehicle. Frequently a ground guide is required. With the present solution, the active sensor(s) may provide a representation of the ground and the system may use the representation to determine the ground environment and possibly also to determine a good route around obstacles, for instance during low-speed travel.

Exemplary method, devices, and computer-readable storage media are set out in the following items:
1. A method for safety monitoring of a safety zone under and in near vicinity around a parked autonomous vehicle before driving, wherein the method comprise:
   - acquiring (501) sensor data from an active sensor system located on the undercarriage of the vehicle, wherein the active sensor system is arranged to transmit a signal and receive the signal reflected off objects within the safety zone and store sensor data representative of substantially all of the safety zone;
   - repeatedly building (502) a representation of the safety zone by acquiring sensor data from the active sensor system;
   - iteratively aggregating (503) the representations of the safety zone with a statistical model; and
   - continuously analysing (504) the aggregation of representations and determining if a sensitive object is located within the safety zone of the vehicle.
2. The method according to item 1, further comprising a step of sending (505) a communication signal, indicative of the object, if the object is detected within the safety zone.
3. The method according to item 2, wherein the step of sending comprise sending the signal to at least one of a control system in the vehicle, a user interface in the vehicle, a portable user device, and a control system located away from the vehicle.
4. The method according to item 1, wherein the safety zone comprises an area under and in the near vicinity around the vehicle where there is a risk of hitting an object.
5. The method according to item 4, wherein the area in the near vicinity around the vehicle is within 10 cm around the vehicle, 20 cm around the vehicle, or 50 cm around the vehicle in the ground plane.
6. The method according to item 1, wherein determining if a sensitive object is located within the safety zone comprise determining if an object larger than a pre-set size and/or pre-set shape is detected.
7. The method according to item 6, wherein the pre-set size is one of 50 cm, 20 cm, or 10 cm in cross-section.
8. The method according to any preceding items, wherein the active sensor system is at least one of a Lidar, radar, and an active sonar sensor system.
9. The method according to any preceding items, wherein the sensor system further comprise at least one optical camera assisting in identification of detected object.
10. The method according to item 9, further comprising transmitting images from the at least one optical camera to at least one of a control system in the vehicle, a user interface in the vehicle, a control system located away from the vehicle, and a portable user device.
11. The method according to any preceding items, wherein the statistical model comprise averaging of the aggregated representations.
12. A processing device, wherein the processing device comprises:
   - at least one processor (201);
   - at least one memory (202); and
   - at least one sensor interface (206);
   wherein the processor is arranged to execute instruction sets stored in the memory to perform a method for safety monitoring of a safety zone under and in a near vicinity around a parked autonomous vehicle before driving, wherein the method comprise:
   - acquiring (501) sensor data via the at least one sensor interface from an active sensor system located on the undercarriage of the vehicle, wherein the active sensor system is arranged to transmit a signal and receive the signal reflected off objects within the safety zone and store sensor data representative of substantially all of the safety zone;
   - repeatedly building (502) a representation of the safety zone by acquiring sensor data from the active sensor system;
   - iteratively aggregating (503) the representations of the safety zone with a statistical model; and
   - continuously analysing (504) the aggregation of representations and determining if a sensitive object is located within the safety zone of the vehicle.
13. A vehicle comprising at least one sensor located on the undercarriage of the vehicle and a processing device arranged to execute the method according to any of items 1 - 11.
14. The vehicle according to item 13, wherein the sensor system is located on a retractable beam.
15. The vehicle according to item 14, wherein the retractable beam and sensor are retractable into a protective housing in the undercarriage of the vehicle.
16. A computer-readable storage media, wherein the computer-readable storage media comprises instruction sets stored in the media to perform a method for safety monitoring of a safety zone under and in a near vicinity around a parked autonomous vehicle before driving, wherein the method comprise:
   - acquiring (501) sensor data via the at least one sensor interface from an active sensor system located on the undercarriage of the vehicle, wherein the active sensor system is arranged to transmit a signal and receive the signal reflected off objects within the safety zone and store sensor data representative of substantially all of the safety zone;
   - repeatedly building (502) a representation of the safety zone by acquiring sensor data from the active sensor system;
   - iteratively aggregating (503) the representations of the safety zone with a statistical model; and
   - continuously analysing (504) the aggregation of representations and determining if a sensitive object is located within the safety zone of the vehicle.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent embodiments should be apparent for the person skilled in the art.

### Abbreviations

- Wi-Fi: Wireless Fidelity (registered trademark of Wi-Fi alliance) - based on IEEE 802.11 protocol
- LoRa: Long Range radio (registered trademark of LoRa alliance)
- Zigbee: Wireless communication protocol for loT and similar applications, handled by the Zigbee Alliance.
- GSM: Global System for Mobile
- GPRS: General Packet Radio Service
- EDGE: Enhanced Data rates for Global Evolution
- LTE: Long term evolution
- IP: Internet Protocol
- Radar: Radio detection and ranging
- Lidar: Light detection and ranging
- ASIL: Automotive Safety Integrity Levels

## Claims

1. A method for safety monitoring of a safety zone under and in near vicinity around a parked autonomous vehicle before driving, wherein the method comprise:
- acquiring (501) sensor data from an active sensor system located on the undercarriage of the vehicle, wherein the active sensor system is arranged to transmit a signal and receive the signal reflected off objects within the safety zone and store sensor data representative of substantially all of the safety zone;
- repeatedly building (502) a representation of the safety zone by acquiring sensor data from the active sensor system;
- iteratively aggregating (503) the representations of the safety zone with a statistical model; and
- continuously analysing (504) the aggregation of representations and determining if a sensitive object is located within the safety zone of the vehicle.

2. The method according to claim 1, further comprising a step of sending (505) a communication signal, indicative of the object, if the object is detected within the safety zone.

3. The method according to claim 2, wherein the step of sending comprise sending the signal to at least one of a control system in the vehicle, a user interface in the vehicle, a portable user device, and a control system located away from the vehicle.

4. The method according to claim 1, wherein the safety zone comprises an area under and in the near vicinity around the vehicle where there is a risk of hitting an object.

5. The method according to claim 4, wherein the area in the near vicinity around the vehicle is within 10 cm around the vehicle, 20 cm around the vehicle, or 50 cm around the vehicle in the ground plane.

6. The method according to claim 1, wherein determining if a sensitive object is located within the safety zone comprise determining if an object larger than a pre-set size and/or pre-set shape is detected.

7. The method according to claim 6, wherein the pre-set size is one of 50 cm, 20 cm, or 10 cm in cross-section.

8. The method according to any preceding claims, wherein the active sensor system is at least one of a Lidar, radar, and an active sonar sensor system.

9. The method according to any preceding claims, wherein the sensor system further comprise at least one optical camera assisting in identification of detected object.

10. The method according to claim 9, further comprising transmitting images from the at least one optical camera to at least one of a control system in the vehicle, a user interface in the vehicle, a control system located away from the vehicle, and a portable user device.

11. The method according to any preceding claims, wherein the statistical model comprise averaging of the aggregated representations.

12. A processing device, wherein the processing device comprises:
- at least one processor (201);
- at least one memory (202); and
- at least one sensor interface (206);
wherein the processor is arranged to execute instruction sets stored in the memory to perform a method for safety monitoring of a safety zone under and in a near vicinity around a parked autonomous vehicle before driving, wherein the method comprise:
- acquiring (501) sensor data via the at least one sensor interface from an active sensor system located on the undercarriage of the vehicle, wherein the active sensor system is arranged to transmit a signal and receive the signal reflected off objects within the safety zone and store sensor data representative of substantially all of the safety zone;
- repeatedly building (502) a representation of the safety zone by acquiring sensor data from the active sensor system;
- iteratively aggregating (503) the representations of the safety zone with a statistical model; and
- continuously analysing (504) the aggregation of representations and determining if a sensitive object is located within the safety zone of the vehicle.

13. A vehicle comprising at least one sensor located on the undercarriage of the vehicle and a processing device arranged to execute the method according to any of claims 1 - 11.

14. The vehicle according to claim 13, wherein the sensor system is located on a retractable beam.

15. The vehicle according to claim 14, wherein the retractable beam and sensor are retractable into a protective housing in the undercarriage of the vehicle.

16. A computer-readable storage media, wherein the computer-readable storage media comprises instruction sets stored in the media to perform a method for safety monitoring of a safety zone under and in a near vicinity around a parked autonomous vehicle before driving, wherein the method comprise:
- acquiring (501) sensor data via the at least one sensor interface from an active sensor system located on the undercarriage of the vehicle, wherein the active sensor system is arranged to transmit a signal and receive the signal reflected off objects within the safety zone and store sensor data representative of substantially all of the safety zone;
- repeatedly building (502) a representation of the safety zone by acquiring sensor data from the active sensor system;
- iteratively aggregating (503) the representations of the safety zone with a statistical model; and
- continuously analysing (504) the aggregation of representations and determining if a sensitive object is located within the safety zone of the vehicle.
